# EUROPEAN PATENT APPLICATION

(11) **EP 1 598 743 A2**
(43) Date of publication of application: **23.11.2005**
(21) Application number: 04015672.1
(22) Date of filing: 02.07.2004
(51) Int. Cl.: G06F 13/40

(54) **Data communication cable for connection between mobile communication terminal and computer**

(30) Priority: 18.05.2004 KR 2004013699
(71) Applicant: Kang, Gil-Jong, Seongnam-si, Gyeonggi-do, 463-765 (KR)
(72) Inventor: Kang, Gil-Jong, Seongnam-si, Gyeonggi-do, 463-765 (KR)
(74) Representative: Viering, Jentschura & Partner

(57) **Abstract**

A data communication cable for connection between a mobile communication terminal and a computer includes: a USB connector connected to a USB port of the computer; a terminal connector connected to a UART port of the mobile communication terminal; a communication conversion chip in one of the USB connector and the terminal connector, the communication conversion chip converting signals for USB to UART; and a plurality of transmission cables connecting the USB connector and the terminal connector.

## Description

This application claims the benefit of Korean Patent Application No. 20-2004-0013699, filed on May 18, 2004, which is hereby incorporated by reference.

### BACKGROUND OF THE INVENTION

### Field of the Invention

The present invention relates to a data communication cable for connection between a mobile communication terminal and a computer, and more particularly, to a data communication cable for universal serial bus (USB) to universal asynchronous receiver transmitter (UART).

### Discussion of the Related Art

Recently, as mobile communication terminals are widely supplied and functions of the mobile communication terminals are improved, requirement for transmission and reception of data between the mobile communication terminal and a computer increases and related technologies are rapidly developed. In general, a serial communication has been used for a data communication between a mobile communication terminal and a computer, and a communication standard for the serial communication may be divided into a Universal Asynchronous Receiver Transmitter (UART) and a Universal Serial Bus (USB). The UART is used for asynchronous serial communication. For example, the UART receives and transmits data with external device through Recommended Standard 232 Revision C (RS-232C). The USB is a common interface connecting with peripheral devices having different standards. For example, a printer, a scanner, a modem and a speaker may be connected to a computer through a USB.

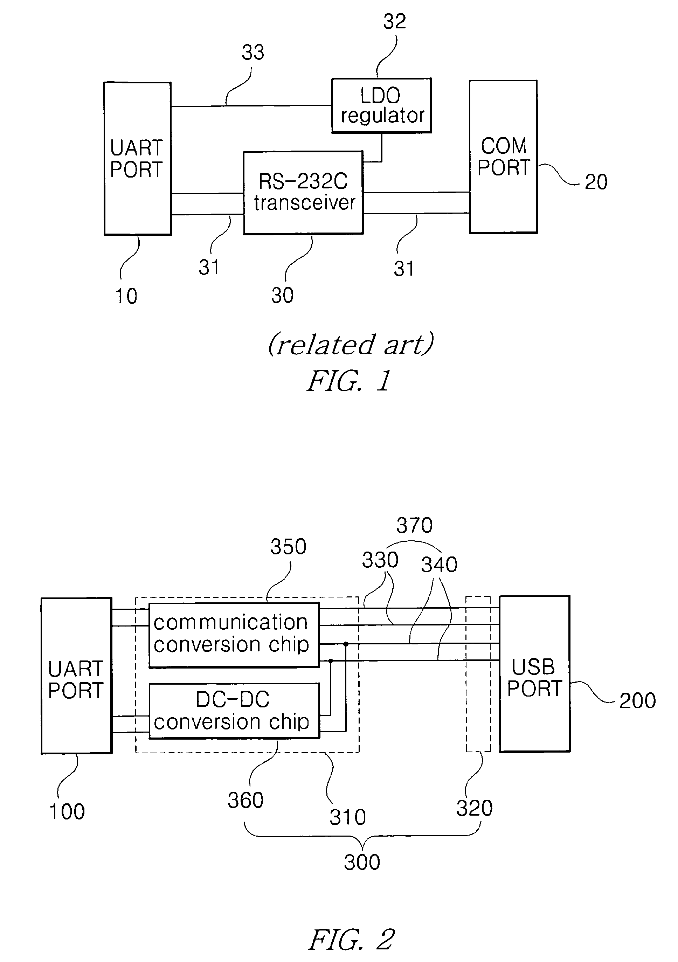

For a data communication between a mobile communication terminal and a computer, a UART port of the mobile communication terminal is connected to a communication (COM) port of the computer, which provides an RS-232C interface, through an RS-232C cable. FIG. 1 is a schematic block diagram showing a data communication method according to the related art. In FIG. 1, an RS-232C transceiver 30 is disposed between a UART port 10 of a mobile communication terminal and a COM port 20 of a computer and connected to the UART port 10 and the COM port 20 through a communication cable 31. Data is transmitted through the communication cable 31. The RS-232C transceiver 30 is driven by a power supplied through a power supply cable 33 from a battery of the mobile communication terminal. A low drop out (LDO) regulator 32 is disposed in the power supply cable 33 for stable power supply.

In a data communication method of FIG. 1, however, a power consumption of the battery for the mobile communication terminal increases and additional elements such as the LDO regulator 32 are required. Specifically, as mobile communication terminals treating large amount of information such as a camera phone and a MPEG Audio Layer 3(MP3) phone are provided more widely, more power of the battery is required. Accordingly, a data communication is interrupted due to shortage of power during reception and transmission of data. In addition, a USB not adopting an RS-232C interface is more widely used as a serial communication standard between a computer and peripheral devices.

In order to solve the problems of power consumption and meet the recent tendency not using an RS-232C interface, a USB data communication cable connecting a USB port of a computer and a port of a mobile communication terminal has been suggested. Since the USB data communication cable transfers a power having a constant voltage of about +5V supplied from the USB port of a computer, the battery of the mobile communication terminal is charged up even during a data communication. Accordingly, an interruption of data communication due to shortage of power of the battery is prevented.

A mobile communication method is classified into a synchronous code division multiple access (CDMA) type and an asynchronous group special mobile (GSM) type. A mobile communication terminal of a CDMA type can utilize a USB data communication cable because it contains a USB interface module therein. However, since a mobile communication terminal of a GSM type does not contain a USB interface module therein, the mobile communication terminal of a GSM type can not utilize a USB data communication cable.

### SUMMARY OF THE INVENTION

Accordingly, the present invention is directed to a data communication cable that substantially obviates one or more of the problems due to limitations and disadvantages of the related art.

An object of the present invention is to provide a data communication cable communicating with a USB and a UART between a mobile communication terminal and a computer.

Another object of the present invention is to provide a portable data communication cable having a low production cost.

Additional features and advantages of the invention will be set forth in the description which follows, and in part will be apparent from the description, or may be learned by practice of the invention. These and other advantages of the invention will be realized and attained by the structure particularly pointed out in the written description and claims hereof as well as the appended drawings.

To achieve these and other advantages and in accordance with the purpose of the present invention, as embodied and broadly described, a data communication cable for connection between a mobile communication terminal and a computer includes: a USB connector connected to a USB port of the computer; a terminal connector connected to a UART port of the mobile communication terminal; a communication conversion chip in one of the USB connector and the terminal connector, the communication conversion chip converting signals for USB to UART; and a plurality of transmission cables connecting the USB connector and the terminal connector.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

FIG. 1 is a schematic block diagram showing a data communication method according to the related art;

FIG. 2 is a schematic block diagram illustrating connection between a UART port of a mobile communication terminal of a GSM type and a USB port of a computer using a data communication cable for USB to UART according to an embodiment of the present invention;

FIG. 3 is a schematic block diagram illustrating a communication conversion chip for a data communication cable for USB to UART according to an embodiment of the present invention; and

FIG. 4 is a schematic view showing a data communication cable for USB to UART according to an embodiment of the present invention.

### DETAILED DESCRIPTION OF THE ILLUSTRATED EMBODIMENTS

Reference will now be made in detail to embodiments of the present invention, example of which is illustrated in the accompanying drawings. Wherever possible, similar reference numbers will be used throughout the drawings to refer to the same or like parts.

FIG. 2 is a schematic block diagram illustrating connection between a UART port of a mobile communication terminal of a GSM type and a USB port of a computer using a data communication cable for USB to UART according to an embodiment of the present invention.

In FIG 2, a terminal connector 310 is connected to a UART port 100 of a mobile communication terminal of GSM type (not shown) and a USB connector 320 is connected to a USB port 200 of a computer (not shown). The mobile communication terminal may include a portable telephone, a personal digital assistant (PDA), a palm personal computer (PC) and a handheld personal computer (HPC). The terminal connector 310 and the USB connector 320 are connected to each other through transmission cables 370 including communication cables 330 and power supply cables 340. The terminal connector 310, the USB connector and the transmission cables 370 constitute a data communication cable 300.

The terminal connector 310 includes a communication conversion chip 350 and a direct current-direct current (DC-DC) conversion chip 360. Data signals of the computer and the mobile communication terminal are transmitted through the communication conversion chip 350 between the UART port 100 and the USB port 200. A source power from the USB port 200 is supplied to the communication conversion chip 350 through the power supply cables 340. The source power may be supplied to the UART port 100 through the DC-DC conversion chip 360. For example, a direct current (DC) voltage of about +5V from the USB port 200 may be dropped to a voltage of about 4.2V fit for the mobile communication terminal by the DC-DC conversion chip 360.

The communication conversion chip 350 converts signals from UART to USB or from USB to UART. In addition, the communication conversion chip 350 may be formed as one-chip. Accordingly, the communication conversion chip 350 is unified into the terminal connector 310 of a single body for minimization. The DC-DC conversion chip 360 may be unified into the terminal connector 310 with the communication conversion chip 350. The communication conversion chip 350 may be a micro-controller of one-chip including a plurality of units such as frequency-oscillation unit and a conversion-program unit.

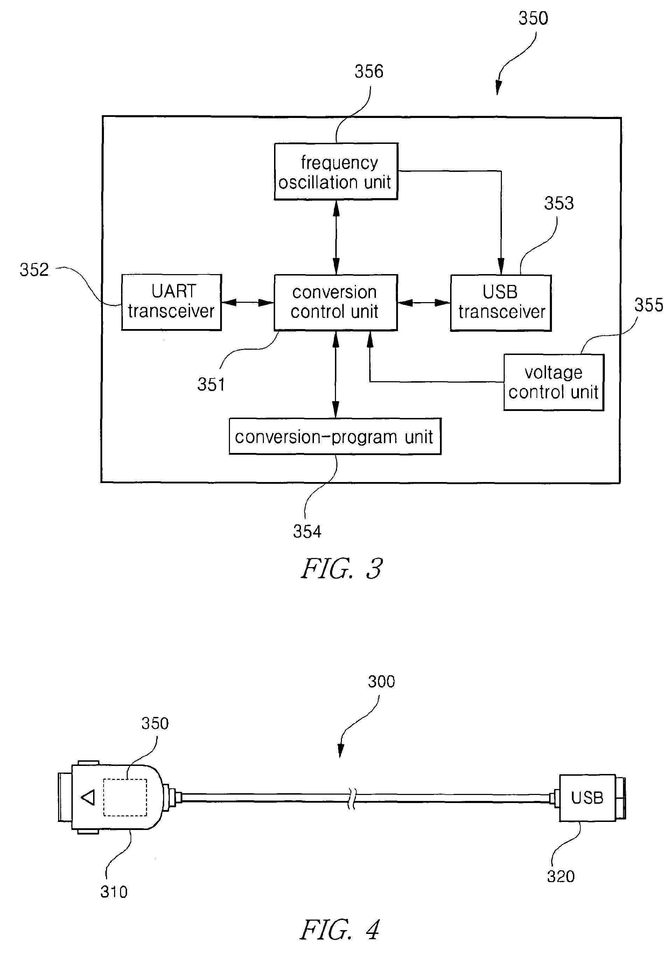

FIG. 3 is a schematic block diagram illustrating a communication conversion chip for a data communication cable for USB to UART according to an embodiment of the present invention.

In FIG. 3, a communication conversion chip 350 includes a conversion-control unit 351, a UART transceiver 352, a USB transceiver 353, a conversion-program unit 354, a frequency-oscillation unit 356 and a voltage-control unit 355. The conversion-control unit 351 adjusts various elements of the communication conversion chip 350 according to a conversion program having a conversion algorithm. The UART transceiver 352 transmits/receives serial signals with the UART port 100 (of FIG. 2) of the mobile communication terminal. The UART transceiver 352 converts serial data into parallel data, or parallel data into serial data. The USB transceiver 353 transmits/receives USB signals with the USB port 200 (of FIG. 2) of the computer. The USB transceiver 353 may support functions such as reset and suspension. The conversion-program unit 354 stores the conversion program. For example, an electrically erasable programmable read only memory (EEPROM) and a flash memory may be used as the conversion-program unit 354. The EEPROM stores data even when a power is turned off and a small amount of data may be erased and rewritten on the EEPROM. Accordingly, the EEPROM may be used for system parameters or system state information and may be embedded in a micro-controller for a system. Since a large amount of data is erased and rewritten on the flash memory, the flash memory may be used as the conversion-program unit 354 on the basis of minimization. The voltage-control unit 355 changes a voltage of a source power from the USB port 200 (of FIG. 2) into a stable voltage for the communication conversion chip 350. The frequency-oscillation unit 356 provides clock signal such as a timing signal and/or a data carrier signal for the USB transceiver 353.

In the embodiment of the present invention, the communication conversion chip 350 is formed of one-chip including a plurality of units such as the conversion-control unit 351, the UART transceiver 352, the USB transceiver 353, the conversion-program unit 354, the frequency-oscillation unit 356 and the voltage-control unit 355. Accordingly, an external connection of the communication conversion chip 350 and the plurality of units is not required and a size of a printed circuit board (PCB) for the communication conversion chip 350 is reduced, thereby unifying the communication conversion chip 350 into the terminal connector 310 (of FIG. 2). In addition, the DC-DC conversion chip 360 (of FIG. 2) may be unified into the terminal connector 310 (of FIG. 2) with the communication conversion chip 350.

Referring again to FIG. 2, although the communication conversion chip 350 and the DC-DC conversion chip 360 are unified into the terminal connector 310, the communication conversion chip 350 and the DC-DC conversion chip 360 may be unified into the USB connector 320 in another embodiment. In another embodiment, the communication conversion chip 350 and the DC-DC conversion chip 360 may be formed in the respective connectors. When the communication conversion chip 350 is formed in the terminal connector 310, the transmission cables 370 between the terminal connector 310 and the USB connector 320 may include the communication cables 330 for DP (data private circuit) and DM (data mart) and the power supply cables 340 for V (voltage) and GND (ground). When the communication conversion chip 350 is formed in the USB connector 320, an additional cable for connecting the UART port 100 and the communication conversion chip 350 may be provided.

In order to form the communication conversion chip 350 in the terminal connector 310 for minimization and portability, the PCB for the communication conversion chip 350 may have a small size. For example, the size of the PCB may be less than 20mm X 20mm. In addition, a four-layered PCB having a size of about 15mm X 13mm may be used for the communication conversion chip 350 and the DC-DC conversion chip 360. In a multilayered PCB, the communication conversion chip 350 and the DC-DC conversion chip 360 may be formed on different layers of PCB.

FIG. 4 is a schematic view showing a data communication cable for USB to UART according to an embodiment of the present invention.

In FIG. 4, a data communication cable 300 for USB to UART includes a terminal connector 310 and a USB connector 320 connected to each other through transmission cables. Since a communication conversion chip 310 is unified into the terminal connector 310, a size of the data communication cable 300 is similar to that of a conventional USB data communication cable.

In an embodiment of the present invention, a communication conversion chip is unified into a connector as one-chip, a data communication cable for USB to UART between a mobile communication terminal and a computer is simplified and portable. Moreover, a production cost for a data communication cable is reduced due to reduction of parts and simplification of circuit.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A data communication cable for connection between a mobile communication terminal and a computer, comprising:
a USB connector connected to a USB port of the computer;
a terminal connector connected to a UART port of the mobile communication terminal;
a communication conversion chip in one of the USB connector and the terminal connector, the communication conversion chip converting signals for USB to UART; and
a plurality of transmission cables connecting the USB connector and the terminal connector.

2. The data communication cable according to claim 1, wherein the communication conversion chip is formed on a PCB having a plurality of layers.

3. The data communication cable according to claim 2, wherein the PCB has a size less than 20mm X 20mm.

4. The data communication cable according to claim 2, further comprising a DC-DC conversion chip in one of the USB connector and the terminal connector.

5. The data communication cable according to claim 4, wherein the DC-DC conversion chip is formed on the PCB.

6. The data communication cable according to claim 5, wherein the communication conversion chip and the DC-DC conversion chip are formed on the different layers of the PCB.

7. The data communication cable according to claim 1, wherein the communication conversion chip comprises:
a UART transceiver transmitting and receiving serial signals with the UART port;
a USB transceiver transmitting and receiving USB signals with the USB port;
a conversion-program unit storing a conversion program;
a frequency-oscillation unit providing clocks for the USB transceiver; and
a conversion-control unit adjusting the UART transceiver, USB transceiver, the conversion-program unit and the frequency-oscillation unit according to the conversion program.

8. The data communication cable according to claim 7, wherein the UART transceiver converts serial data into parallel data, or parallel data into serial data.

9. The data communication cable according to claim 7, wherein the conversion-program unit is an EEPROM.

10. The data communication cable according to claim 7, wherein the communication conversion chip further comprises a voltage-control unit changing a voltage of a source power from the USB port into a stable voltage for the communication conversion chip.

11. The data communication cable according to claim 1, wherein the plurality of transmission cables comprise communication cables and power supply cables.
